# EUROPÄISCHE PATENTSCHRIFT

(11) **EP 1 219 935 B1**
(45) Veröffentlichungstag und Bekanntmachung des Hinweises auf die Patenterteilung: **22.02.2017**
(21) Anmeldenummer: 01124894.5
(22) Anmeldetag: 30.06.2000
(51) Int. Cl.: G01D 5/251, G01D 5/14, F15B 15/28, F15B 13/04

(54) **Elektrischer Wegaufnahmer für ein Hydraulik-Gerät**
Electrical displacement sensor for hydraulic apparatus
Capteur électrique de déplacement pour appareil hydraulique

(30) Priorität: 28.07.1999 DE 29913183 U
(43) Veröffentlichungstag der Anmeldung: 03.07.2002
(62) Teilanmeldung aus: 00113931.0
(73) Patentinhaber: HAWE Hydraulik SE, 81673 München (DE)
(72) Erfinder: Heusser, Martin, Dipl.-Ing. ETH, 81245 München (DE); Neumair, Georg, Dipl.-Ing. FH, 85402 Thalhausen (DE); Csiszar, Miklos, 81739 München (DE)
(74) Vertreter: Grosse Schumacher Knauer von Hirschhausen

(56) Entgegenhaltungen:
- EP-A- 0 907 068
- GB-A- 2 143 972
- US-A- 4 081 635
- US-A- 4 107 604
- US-A- 4 608 870
- US-A- 5 787 915

## Beschreibung

Die Erfindung betrifft ein Hydraulikgerät der im Oberbegriff des Anspruchs 1 angegebenen Art.

Bei dem aus US-A-5 787 915 bekannten Wegeschieber eines Hydraulikgerätes sind zwei Hallsensoren in einen im am Gehäuse angebrachten Gehäuseaufsatz enthaltenen, elektrisch betriebenen Linearmotor zum Verstellen des Schieberkolbens integriert. Die zwei axial beabstandeten Hallsensoren sind in Polkörpern des Linearmotors angrenzend an eine äußere Hülle des Gehäuseaufsatzes platziert. Zwischen den Polkörpern sind zwei mit Strom beaufschlagbare Spulen und zwischen diesen ein stationärer, radial polarisierter Permanentmagnetring angeordnet. Der Linearmotor enthält eine doppelt konische Armatur, die mit dem Schieberkolben und einer Zentrierfederanordnung für den Nullstellungsbereich gekoppelt ist. Die beiden Hallelemente messen den magnetischen Fluss in den Polkörpern und erzeugen zwei lineare Signale, die zur Bestimmung der Ist-Position ausgewertet und verarbeitet und mit einem Kommandosignal für die Sollposition des Schieberkolbens verglichen werden. Bei dem Vergleich ermittelte Abweichungen werden in ein Korrektursignal gewandelt, mit dem der Linearmotor elektrisch betätigt wird, um die Positionsabweichung des Schieberkolbens zu beseitigen. Die an den Druckmittelzulauf des Gehäuses des Wegeschiebers angeschlossene Druckquelle dieses Hydraulikgerätes ist eine Druckquelle für fixierten Druck.

Ein aus US-A-4 107 604 bekanntes Höhenmessgerät enthält einen aus einem Gehäuse durch Federkraft linear ausfahrbaren Taststift, der einen koaxialen Stabmagneten enthält. An einer innenliegenden Taststift-Führung ist ein Hallelement platziert, das ein im Wesentlichen lineares elektrisches Ausgangssignal liefert, wenn sich der Taststift bewegt. Der Nulldurchgang des Ausgangssignal entspricht einer Position des Taststifts, an der die beiden Pole des Stabmagneten das Hallelement mittig zwischen sich einschließen. Das Gerät dient zur Höhenmessung eines den Taststift beaufschlagenden Objekts.

Ein aus US-A-4 081 635 bekannter Strömungsschalter liefert ein elektrisches Ausgangssignal, um anzuzeigen, ob in einer Hydraulikleitung eine bestimmten Strömung oder keine Strömung vorliegt. Ein von der Strömung im Gehäuse linear gegen Federkraft verschiebbarer Kolben wird von einer im Gehäuse angeordneten Sonde durchsetzt. Der Kolben enthält einen Stabmagneten. In der Sonde ist ein Reed-Schalter enthalten. Der Reed-Schalter ist abhängig von der Kolbenposition relativ zu einem Schaltpunkt offen oder geschlossen, und öffnet bzw. schließt am Schaltpunkt abhängig von der Bewegungsrichtung des Kolbens zum Schaltpunkt.

Aus der Druckschrift D 7260 ST, März 1992, der Fa. Heilmeier & Weinlein, 81673 München, sind Wegeschieberblöcke des Typs DLS für Gabelstapler, bekannt, bei denen ein Wegaufnehmer vorgesehen ist, mit dem elektrische Signale erzeugt werden, die anzeigen, ob sich der Schieberkolben innerhalb des Nullstellungsbereiches befindet oder nicht, fast analoger Form repräsentieren, wo sich der Schieberkolben innerhalb seines Verstellweges befindet. Auf den Seiten 6, 7, 8, 10 der Druckschrift werden konstruktive Lösungen des Wegaufnehmers dargestellt. Mit dem verstellbaren Schieberkolben ist eine Steuerkurve verbunden, die als Betätiger für einen Schalter fungiert, der auf einer am Wegeschieberblock montierten Blechkonsole justierbar angebracht ist. Innerhalb des Nullstellungsbereiches wird der Schalter gedrückt. Sein Signal repräsentiert den Nullstellungsbereich, der zumeist nur wenige Millimeter lang ist. Zusätzlich wird ein Potentiometer angebracht, das über meist den gesamten Verstellweg ein Analogsignal erzeugt. Ist der Wegaufnehmer herstellerseitig bereits angebracht, dann besteht zufolge unvermeidbarer Einflüsse beim Transport und der Lagerhaltung meist die Notwendigkeit, Feinjustierungen am Einsatzort vorzunehmen. Ferner besteht die Gefahr, dass die vorstehenden Komponenten des Wegaufnehmers beschädigt werden. Außerdem sind die Wegaufnehmer verschleißanfällig und wartungsbedürftig.

Der Erfindung liegt die Aufgabe zugrunde, ein Hydraulikgerät, insbesondere mit einem 3/3- oder 4/3-Wegeschieber, zu schaffen, dessen Wegaufnehmer ohne Nachjustierung funktionssicher, wartungsfrei und kostengünstig aussagefähige Signale innerhalb des Stellwegs des Schieberkolbens liefert, um die Druckquelle des Hydraulikgerätes effizient steuern zu können.

Die gestellte Aufgabe wird mit den Merkmalen des Anspruchs 1 gelöst.

Der Wegeschieber in dem Hydraulikgerät für einen Stapler ist ein 3/3- oder 4/3-Wegeschieber, wobei die Steuerung einer drehzahlregelbaren Pumpe in Abhängigkeit von der Stellung des Schieberkolbens bzw. unter Anpassung an die Stellbewegung des Schieberkolbens erfolgt. Wird das Hallelement auf den Stabmagneten ausgerichtet, dann kann ein Analogsignal abgeleitet werden, mit dem bei eingeschalteter Pumpe die Pumpendrehzahl steuerbar ist, mit der die Fördermenge durch den Wegeschiebers eingestellt wird. Das analoge Signal, das den gesamten Stellweg oder einen größeren Abschnitt des Stellweges repräsentiert, lässt sich mittels des die Magnetfelddichte des Stabmagneten abtastenden Hallelements beschaffen. Das Hallelement nutzt den an den Kraftfeld-Schwachbereich angrenzenden Kraftfeldübergang in den Kraftfeld-Starkbereich, d.h., einen Verlauf der Magnetfelddichte, der mit geringem Aufwand zu einem linearen Signal führt. In dem Wegeschieber wird der Schieberkolben manuell, hydraulisch, mechanisch, elektromotorisch, pneumatisch oder auf andere Weise verstellt. Der Wegaufnehmer kann die Verstellbewegung des Schieberkolbens über einen den Stabmagneten aufweisenden Verlängerungsteil des Schieberkolbens abgreifen, der in dem Gehäuseaufsatz verfahrbar ist. Der Stabmagnet bewegt sich im Druckmittel, während das Hallelement außerhalb des Druckmittels am Gehäuseaufsatz angeordnet ist.

Bestimmte Dimensionen des Stabmagneten, z. B. ein Verhältnis der Länge zur Breite von L:B von ca. 5:1, gewährleisten einen ausgeprägten Kraftfeld-Schwachbereich. Durch äußere Einflüsse und Alterung kaum beeinflussbare magnetische Eigenschaften des Stabmagneten ergeben sich, falls dieser aus einer gesinterten Al-Ni-Co-Legierung besteht. Es ist jedoch nicht ausgeschlossen, dass auch Stabmagneten aus anderen magnetisierbaren Werkstoffen den Anforderungen genügen.

Zweckmäßig ist zusätzlich zum Hallelement ein Reed-Schalter vorgesehen, der ein den Nullstellungsbereich des Schieberkolbens repräsentierendes Signal erzeugt, das verknüpft mit dem Analogsignal des Hallelementes zum Ein- und Ausschalten der Pumpe eingesetzt wird.

Anhand der Zeichnungen werden Ausführungsformen des Erfindungsgegenstandes erläutert. Es zeigen:
- Fig. 1: schematisch ein Hydraulikgerät mit einem Wegaufnehmer,
- Fig. 2: schaubildlich das Funktionsprinzip des Wegaufnehmers,
- Fig. 3: einen Längsschnitt durch einen Wegeschieber-Block eines Staplers, mit einem Wegaufnehmer, und
- Fig. 4: Diagramme mit Kennlinien, wie sie sich aus der Verwendung des Wegaufnehmers ergeben.

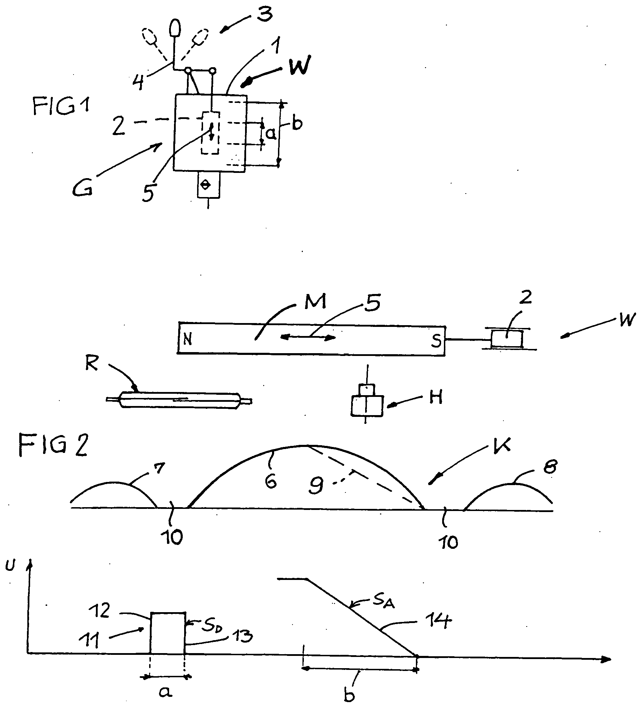

In Fig. 1 ist ein hydraulisches Gerät G schematisch dargestellt, das ein Gehäuse 1 und ein im Gehäuse in einer Bewegungsrichtung 5 verstellbares Element 2 enthält, z. B. einen Schieberkolben zum Steuern von Druckmittel zu bzw. von einem Hydroverbraucher. Die Verstellung wird mit einem Verstellmechanismus 3 bewerkstelligt, beispielsweise mittels eines Handhebels 4. Anstelle des Handhebels könnte auch ein manueller, mechanischer,
elektromotorischer, magnetischer, pneumatischer oder hydraulischer Stellmechanismus vorgesehen sein. Das Element 2 durchläuft einen Verstellweg b, innerhalb dessen sich ein bestimmter kleinerer Abschnitt a, z. B. ein so genannter Nullstellungsbereich, befindet. Mittels eines elektrischen Wegaufnehmers W wird beispielsweise der Abschnitt a des Stellwegs b überwacht.

Der Wegaufnehmer W besteht in Fig. 2 aus einem Stabmagneten M, der auf beliebige Weise mit dem Element 2 bewegungsgekoppelt ist und mit seiner Längsachse parallel zur Bewegungsrichtung 5 liegt, und einem Reed-Schalter R, dessen Längsachse zumindest weitgehend parallel zur Längsachse des Stabmagneten M liegt, und der durch das magnetische Kraftfeld K des Stabmagneten M beaufschlagbar ist. Auf den gleichen Stabmagneten M ist ein Hallelement H ausgerichtet, das auf die Magnetfelddichte im Kraftfeld K des Stabmagneten M anspricht.

Der Stabmagnet M besteht zweckmäßigerweise aus einer gesinterten Aluminium-Nickel-Kobalt-Legierung. Seine Länge steht zur Dicke bzw. zum Durchmesser in einem Verhältnis von 3:1 bis 6:1, vorzugsweise von 4:1 bis 5:1. Ein konkretes Ausführungsbeispiel wäre ein Stabmagnet mit einem Durchmesser von 5 mm und einer Länge von 25 mm. Aus dem Ansprechbereich des parallel dazu angeordneten Reed-Schalters R gesehen, hat das Kraftfeld K des liegenden Stabmagneten M nahe den beiden Polenden jeweils einen Starkbereich 7, 8 und zwischen diesen einen ausgeprägten Starkbereich 6. Die Bereiche 7, 8, 6 sind voneinander durch zwei Schwachbereiche 10 getrennt, deren in Bewegungsrichtung 5 gesehene Längen im Regelfall kleiner sind als die Längen der Bereiche 7, 6, 8. Die Schwachbereichlänge entspricht an der Position des Reed-Schalters R der Länge des Nullstellungsbereiches des Elementes 2, z. B. ± 2,0 mm. Zumindest einer der Schwachbereiches 10 des Kraftfeldes K wird zur Betätigung des Reed-Schalters R bei der Bewegung des Stabmagneten M in Bewegungsrichtung 5 eingesetzt, um ein Signal SD zu erzeugen, das (z. B. durch Invertieren) die Form eines Rechtecks 11 mit vorderen und hinteren Flanken 12, 13 und dazwischen einen konstanten Pegel hat. Der Abstand zwischen den Flanken 12, 13 in Bewegungsrichtung entspricht dem Abschnitt a im Stellweg b des Elements 2. Das Signal SD ist ein digitales Signal (Ein/Aus), das aussagefähig dafür ist, ob sich das Element 2 im Abschnitt a (Nullstellungsbereich) befindet, oder nicht.

Additiv kann das Signal SD mit einem Analogsignal SA des Hallelements H verknüpft werden, das mit demselben Stabmagneten M kooperiert und auf dessen Magnetfelddichte anspricht. Zweckmäßigerweise greift das Hallelement H einen Übergang vom Schwachbereich 10 in den ausgeprägten Starkbereich 6 bzw. dessen gestrichelt angedeutete Flanke 9 ab, um über den Stellweg b das Analogsignal SA abzuleiten, das als lineares Signal 14 verarbeitbar ist und analog repräsentiert, wo innerhalb des Stellweges b sich das Element 2 gerade befindet oder in welche Richtung es sich bewegt.

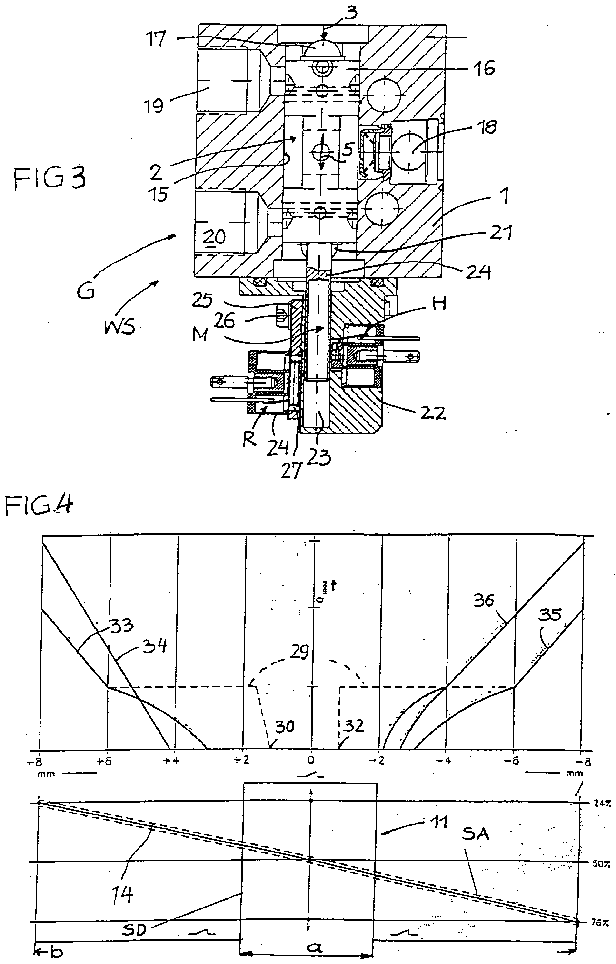

In Fig. 3 ist das Hydraulikgerät G ein Wegeschieber WS, in dessen Gehäuse 1 in einer Gehäusebohrung 15 ein das Element 2 bildender Schieberkolben 16 in der Bewegungsrichtung 5 verstellbar ist. An dem Schieberkolben greift der Verstellmechanismus 3 an, und zwar an einem Ende 17 des Schieberkolbens. Am anderen Ende des Schieberkolbens ist ein rohrförmiger Verlängerungsteil 24 angeschlossen, der den Stabmagneten M aufnimmt.

Mit dem Schieberkolben 16 werden Strömungsverbindungen zwischen einem Druckmittelzulauf 18, Verbraucheranschlüssen 19, 20 und einem Rücklaufanschluss 21 im Gehäuse 1 gesteuert. Da, wie bei solchen Hydraulikgeräten üblich, zur Vermeidung von Strömungsverlusten oder unrichtigen Drucksignalen zwischen einzelnen Steuerkanten im Gehäuse und am Schieberkolben eine axiale Überdeckung eingehalten werden muss, besitzt der Schieberkolben 16 einen in diesem Fall zentralen Nullstellungsbereich, innerhalb dessen der Druckmittelzulauf 18 mit keinem der Verbraucheranschlüsse 19, 20 verbunden ist. Dieser Nullstellungsbereich kann sich über mehrere Millimeter (z. B. ± 2 mm) erstrecken und soll mittels des Wegaufnehmers W überwacht werden, um Signale für zugehörige Steuerkomponenten auf elektrischem Wege abzuleiten, mit denen bestimmte Steuerroutinen eingeleitet werden, abhängig davon, ob sich der Schieberkolben 16 noch im Nullstellungsbereich befindet, oder nicht.

Der Wegaufnehmer W ist in einen Gehäuseaufsatz 22 eingegliedert, der an einer Seite des Gehäuses 1 befestigt ist und zumindest teilweise aus nicht magnetischem Material besteht (aus Kunststoff oder einem Leichtmetall). Der Verlängerungsteil 24 ist in einer mit Druckmittel beaufschlagbaren Kammer 23 (Blindbohrung) des Gehäuseaufsatzes 22 verschiebbar. An einer Seitenfläche des Gehäuseaufsatzes 22, die parallel zur Bewegungsrichtung 5 ist, ist eine Tragplatte 25 mit Befestigungseinrichtungen 26 festgelegt, die den Reed-Schalter R trägt. Für den Reed-Schalter R ist ein Fenster 27 oder ein Befestigungsmittel in der Tragplatte 25 vorgesehen. Der Reed-Schalter R ist in einem Gehäuse 24 untergebracht, das Anschlusskontakte oder Steckfahnen für einen darauf festzulegenden Stecker hat.

Das Hallelement H, das auf derselben Tragplatte 25 wie der Reed-Schalter R befestigt sein könnte, ist in Fig. 4 an der anderen Seite des Stabmagneten M im Gehäuseaufsatz 22 gezeigt. Das Hallelement H ist auf den Starkbereich oder den Übergang in den Starkbereich des Kraftfeldes des Stabmagneten M ausgerichtet und überwacht z. B. den gesamten Stellweg b des Schieberkolbens 16, um das lineare Analogsignal SA abzuleiten, das gegebenenfalls steuerungsseitig mit dem digitalen Signal SD des Reed-Schalters R verknüpft wird, um Aussagen zur Position oder Verstellrichtung des Schieberkolbens 16 innerhalb des Nullstellungsbereiches zu erhalten.

Anhand Fig. 4 wird verdeutlicht, wie die Signale des Wegaufnehmers zu einer hydraulischen Steuerung eingesetzt werden. Im unteren Teil von Fig. 4 ist innerhalb des Stellweges b der Signalverlauf der Signale SD und SA gezeigt. Das Signal SD liegt nur über den Abschnitt a entsprechend dem Nullstellungsbereich vor. Da der Reed-Schalter 28 außerhalb des Abschnittes a geschlossen und innerhalb des Abschnittes a offen ist, werden seine Signale invertiert. Das analoge Signal SA hat in Fig. 4 am Ende an der linken Seite einen maximalen Wert und fällt zum rechten Ende im wesentlichen linear ab. Die beiden Endpunkte entsprechen beispielsweise 24 und 76 % einer bestimmten Spannung.

Im obenliegenden Diagramm ist der Stellweg b in mehrere Abschnitte aufgeteilt, die jeweils 2,0 mm lang sind und von Null positiv und negativ ausgehen. Abhängig von der Verstellrichtung des Schieberkolbens 16 aus der Null-Lage nach links oder nach rechts wird eine drehzahlregelbare Pumpe am Punkt 30 bzw. 32 eingeschaltet und innerhalb des Abschnitts a bis auf eine Minimaldrehzahl 29 hochgefahren. In Verstellrichtung nach links wird die Minimaldrehzahl 29 gehalten, bis bei + 6 mm die Drehzahl entsprechend der Kurve 33 angehoben wird, die die Fördermenge des Druckmittels in dem Verbraucheranschluss 19 oder 20 einstellt. Fig. 4 repräsentiert mit der Kurve 33 auch den Hub eines Hydraulikverbrauchers, beispielsweise eines Neigezylinders, eines Staplers beim Neigen. Dieser Kurve 33 entspricht an der rechten Seite die Kurve 35, die das Neigen in der anderen Richtung repräsentiert. Die Kurven 34 und 36 repräsentieren die Fördermenge für einen bzw. den Hub eines Hubzylinders, der aus der Pumpe mit Druckmittel versorgt wird. Die Kurve 36 verdeutlicht das Heben unter Einsatz der Pumpe, während die Kurve 34 das Senken bei abgeschalteter Pumpe versinnbildlicht.

## Patentansprüche

1. Hydraulikgerät für einen Stapler, mit wenigstens einem Wegeschieber (WS), insbesondere 3/3- oder 4/3-Wegeschieber, der in einem Gehäuse (1) des Wegeschiebers (WS) einem Wegaufnehmer (W) für einen entlang eines festgelegten Stellweges (b) mittels eines Verstellmechanismus(3) aus einem zentralen Nullstellungsbereich in beiden Richtungen verstellbaren Schieberkolben (16) aufweist, und mit einer Druckquelle, wobei das Gehäuse (1) einen mit einer Druckquelle verbundenen Druckmittelzulauf (18) aufweist und der Wegaufnehmer (W) in einem am Gehäuse (1) angeordneten Gehäuseaufsatz (22) wenigstens ein stationäres, magnetisch beaufschlagtes Hallelement (H) umfasst, das zur Position oder Bewegungsrichtung des Schieberkolbens (16) innerhalb des Stellweges (b) wenigstens ein lineares analoges Signals (SA) generiert, **dadurch gekennzeichnet, dass** zur magnetischen Beaufschlagung nur eines im Gehäuseaufsatz (22) angeordneten Hallelementes (H) ein mit seiner Längsachse zur Verstellrichtung des Schieberkolbens (16) paralleler Stabmagnet (M) in einem Verlängerungsteil (24) des Schieberkolbens (16) aufgenommen ist, dass der Verlängerungsteil (24) mit dem Stabmagneten (M) derart in dem Gehäuseaufsatz (22) verschiebbar ist, dass das auf dem Stabmagneten (M) ausgerichtete Hallelement (H) zum Generieren eines über den Stellweg (b) linearen Analogsignals (SA), dessen Endpunkte unterschiedlichen Prozentanteilen einer bestimmten elektrischen Spannung entsprechen, auf einen an einen Kraftfeld-Schwachbereich (10) angrenzenden Kraftfeldübergang in einen Kraftfeld-Starkbereich (6) des Stabmagneten (M) anspricht, und dass die an den Druckmittelzulauf (18) angeschlossene Druckquelle eine drehzahlregelbare Pumpe ist, deren Drehzahl mittels des Analogsignals (SA) in Abhängigkeit von der Position bzw. in Anpassung an die Stellbewegung des Schieberkolbens (16) steuerbar ist.

2. Hydraulikgerät gemäß Anspruch 1, **dadurch gekennzeichnet, dass** der Gehäuseaufsatz (22) eine mit Druckmittel beaufschlagbare Kammer (23) für den Verlängerungsteil (24) aufweist, und dass das Hallelement (H) außerhalb der Kammer (23) angeordnet ist.

3. Hydraulikgerät gemäß Anspruch 1, **dadurch gekennzeichnet, dass** zusätzlich zum Hallelement (H) am Gehäuseaufsatz (22) ein Reed-Schalter (R) vorgesehen ist, der auf der Basis des Schwachbereiches (10) des Kraftfeldes des Stabmagneten (M) mit einem Signal (SD) einen bestimmten, den Nullstellungsbereich des Schieberkolbens (16) repräsentierenden Abschnitt (a) des gesamten Stellwegs (b) des Schieberkolbens (16) anzeigt, und dass die Pumpe anhand des Signals (SD) des Reed-Schalters (R) unter Verknüpfung mit dem Analogsignal (SA) des Hallelementes (H) ein- und ausschaltbar ist.

## Claims

1. A hydraulic apparatus for a stacker having at least one directional spool valve (WS), in particular 3/3 or 4/3 directional spool valve, that in a housing (1) of the directional spool valve (WS) has a spool travel gauge (W) for a piston (16) being adjustable in both directions along a set adjusting distance (b) via an adjusting mechanism (3) from a central zero position range, and having a pressure source, wherein the housing (1) has a pressure means supply (18) being connected to a pressure source and the spool travel gauge (W) comprises at least one stationary, magnetically charged Hall element (H) within a housing top (22) being disposed at the housing (1), that generates at least one linear analogue signal (SA) for the position or movement direction of the piston (16) within the adjusting distance (b), **characterized in that** for magnetically charging only one of the Hall elements (H) being disposed within the housing top (22) there is accommodated a bar magnet (M) whose longitudinal axis is parallel to the adjusting direction of the piston (16) within an extension part (24) of the piston (16); that the extension part (24) is displaceable with the bar magnet (M) within the housing top (22) **in that** the Hall element (H) being oriented on the bar magnet (M) responds to a force field transition in a strong force field range (6) of the bar magnet (M) that is adjacent to a weak force field range (10) to generate an analogue signal (SA) being linear over the adjusting distance (b), whose end points correspond to different percentages of a particular voltage; and that the pressure source connected to the pressure means supply (18) is a speed-controllable pump, the speed of which can be controlled via the analogue signal (SA) as a function of the position or in adaptation to the adjusting movement of the piston (16), respectively.

2. The hydraulic apparatus according to claim 1, **characterized in that** the housing top (22) has a chamber that can be pressurized with pressure means (23) for the extension part (24), and that the Hall element (H) is disposed outside of the chamber (23).

3. The hydraulic apparatus according to claim 1, **characterized in that** in addition to the Hall element (H) there is provided a reed switch (R) at the housing top (22) that on the basis of the weak range (10) of the force field of the bar magnet (M) with a signal (SD) indicates a particular portion (a) representing the zero position range of the piston (16) of the whole adjusting distance (b) of the piston (16), and that the pump due to the signal (SD) of the reed switch (R) by connection with the analogue signal (SA) of the Hall element (H) can be switched on and off.

## Revendications

1. Appareil hydraulique pour chariot élévateur avec au moins un distributeur à tiroir (WS), en particulier un distributeur 3/3 ou 4/3 voies, qui présente un capteur de déplacement (W) dans un boîtier (1) du distributeur à tiroir (WS) pour une soupape coulissante (16) pouvant être déplacée dans les deux sens au moyen d'un mécanisme de déplacement (3) le long d'une course de réglage (b) définie à partir d'une zone centrale de remise à zéro, et avec une source de pression, dans lequel le boîtier (1) présente une arrivée de fluide sous pression (18) reliée à une source de pression et le capteur de déplacement (W) comprend, dans un couvercle de boîtier (22) placé au niveau du boîtier (1), au moins un élément à effet Hall (H) stationnaire, à action magnétique, qui génère au moins un signal analogique (SA) linéaire pour la position ou le sens de déplacement de la soupape coulissante (16) dans la course de réglage (b), **caractérisé en ce qu'**un barreau aimanté (M) parallèle au sens de déplacement de la soupape coulissante (16) sur son axe longitudinal est logé dans une extension (24) de la soupape coulissante (16) pour l'action magnétique d'un seul élément à effet Hall (H) placé dans le couvercle de boîtier (22), **en ce que** l'extension (24) peut être déplacée avec le barreau aimanté (M) dans le couvercle de boîtier (22) de telle sorte que l'élément à effet Hall (H) orienté vers le barreau aimanté (M) et destiné à générer un signal analogique (SA) linéaire pendant la course de réglage (b), dont les extrémités correspondent aux différents pourcentages d'une tension électrique définie, répond à une transition de champ de force contiguë à une zone d'affaiblissement (10) du champ de force vers une zone de renforcement (6) du champ de force du barreau aimanté (M), et **en ce que** la source de pression raccordée à l'arrivée de fluide sous pression (18) est une pompe à vitesse réglable, dont la vitesse peut être commandée au moyen du signal analogique (SA) en fonction de la position ou par ajustement avec le déplacement de réglage de la soupape coulissante (16).

2. Appareil hydraulique selon la revendication 1 **caractérisé en ce que** le couvercle de boîtier (22) présente une chambre (23) pouvant être soumise à un fluide sous pression pour l'extension (24), et **en ce que** l'élément à effet Hall (H) est placé à l'extérieur de la chambre (23).

3. Appareil hydraulique selon la revendication 1 **caractérisé en ce qu'**un interrupteur Reed (R) est prévu au niveau du couvercle de boîtier (22) en plus de l'élément à effet Hall (H), lequel interrupteur affiche par un signal (SD) une certaine partie (a) de la course de réglage (b) complète de la soupape coulissante (16) représentant la zone de remise à zéro de la soupape coulissante (16) sur la base de la zone d'affaiblissement (10) du champ de force du barreau aimanté (M), et **en ce que** la pompe peut être activée ou désactivée à l'aide du signal (SD) de l'interrupteur Reed (R) en liaison avec le signal analogique (SA) de l'élément à effet Hall (H).
